Europäisches Patentamt

European Patent Office

Office européen des brevets

(11) Publication number: **0 152 693**
**A1**

# EUROPEAN PATENT APPLICATION

(21) Application number: 84308658.8

(22) Date of filing: 13.12.84

(51) Int. Cl.⁴: **G 11 B 23/04**

(30) Priority: 29.12.83 JP 202856/83

(43) Date of publication of application: 28.08.85
Bulletin 85/35

(84) Designated Contracting States: AT CH DE FR GB IT LI NL SE

(71) Applicant: SONY CORPORATION,
7-35 Kitashinagawa 6-Chome Shinagawa-ku,
Tokyo 141 (JP)

(72) Inventor: Harada, Masayuki c/o Patent Div., Sony
Corp. 7-35 Kitashinagawa-6 Shinagawa-6, Shinagawa-ku
Tokyo (JP)

(74) Representative: Thomas, Christopher Hugo et al, D
Young & Co 10 Staple Inn, London WC1V 7RD (GB)

(54) Magnetic tape cassettes.

(57) A magnetic tape cassette comprises a cassette housing (1) having an upper and a lower half (2, 3), and a pair of tape reels (4, 5) therein. A rib (36) is formed on the lower periphery of a window (14) in the upper wall (2a) of the upper half (2) so as to prevent the pair of tape reels (4, 5) held in the cassette housing (1) from excess movement towards the upper half (2).

1

## MAGNETIC TAPE CASSETTES

This invention relates to magnetic tape cassettes suitable for magnetic recording and/or reproducing apparatus, such as video tape recorders.

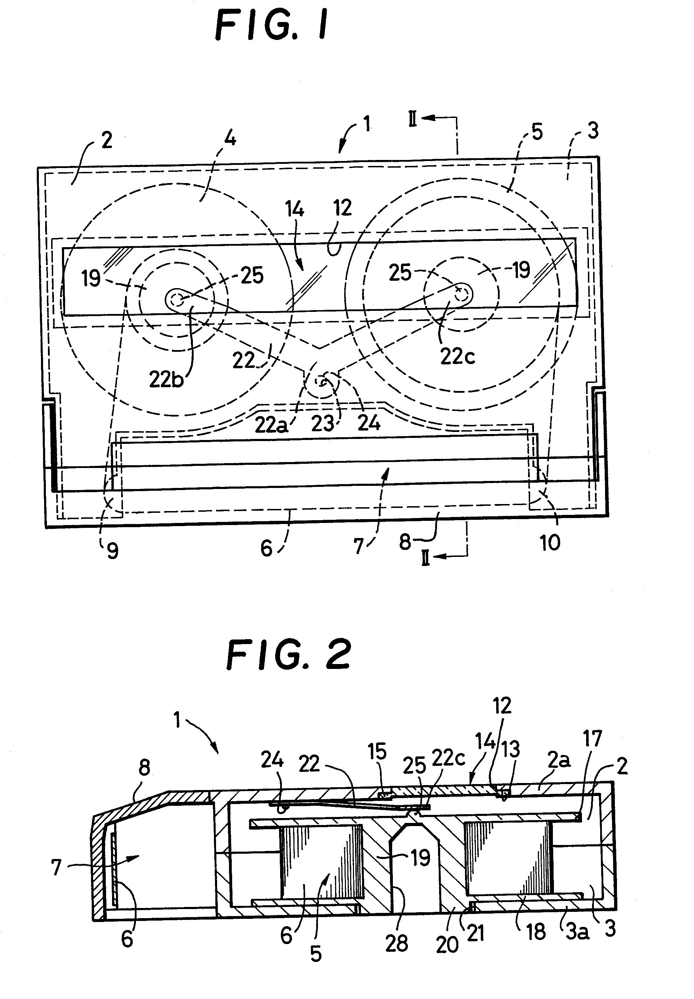

Figures 1 to 5 of the accompanying drawings illustrate a previously proposed tape cassette used for a video tape recorder.

As shown in Figures 1 and 2, a cassette housing 1 comprises an upper half 2 and a lower half 3, which are moulded out of synthetic resin and screwed together. In the cassette housing 1 are rotatably held a pair of tape reels 4 and 5, on which a magnetic tape 6 is wound. A front lid 8 is provided rotatably across a front opening 7 of the cassette housing 1, and the magnetic tape 6 is guided by a pair of tape guides 9 and 10, and runs across the front opening 7 inside and along the front lid 8.

A window space 12 having a substantially rectangular configuration is disposed in an almost central part in the longitudinal direction of, and across almost the whole width in the transverse direction of, the upper wall 2a of the upper half 2. A step portion 13 is formed on the lower periphery of the window space 12 at the inner side of the upper wall 2a. In the window space 12, a transparent window plate 14 is arranged so as to be formed integrally with the upper half 2.

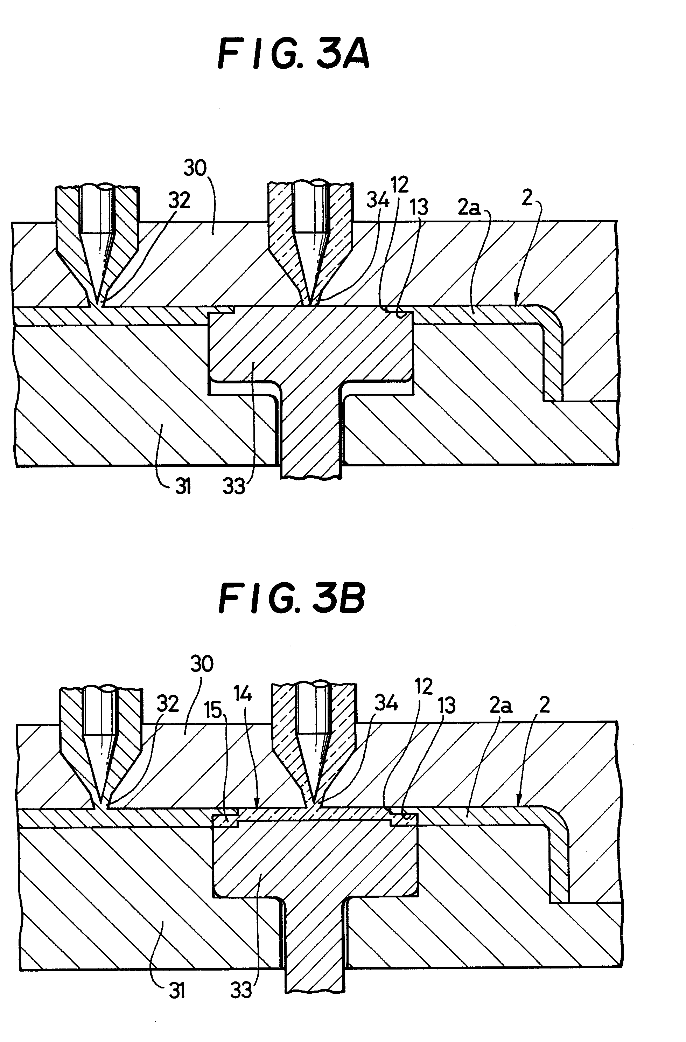

That is, as illustrated in Figures 3A and 3B, the transparent window plate 14 is formed integrally with the upper half 2 within an upper and a lower mould core 30 and 31 by injection moulding from synthetic resin. As shown in Figure 3A, resin, such as, for example, black resin is firstly injected through a first injection gate 32 of the upper mould core 30, which is a stationary core for moulding the upper half 2. At this time, a slide mould core 33 arranged in the lower mould core 31, which is movable, is in the lifted position as shown in Figure 3A, so that the window space 12 is formed in the upper half 2. In addition, as the top of the slide mould core 33 has a step on its periphery, the step portion 13 is formed on the lower periphery of the window space 12.

2 0152693

After the upper half has been formed, the slide mould core 33 is slid down within the lower mould core 31 as illustrated in Figure 3B. Then, transparent resin is injected through a second injection gate 34 into the window space 12 which is formed due to the descent of the slide mould core 33. When this transparent resin fills the window space 12, black resin on the periphery of the window space 12 is partly melted. When the resin re-sets, the transparent window plate 14 is formed integrally with the upper half 2 in the window space 12, and the shape of the transparent window 14 is copied from the top of the slide mould core 33, so that a flange 15 on the lower periphery of the transparent window plate 14 extends along the step portion 13. After the transparent window plate 14 has been formed integrally with the upper half 2 and assembly of the tape cassette is finished, the inside of the cassette housing 1 and in particular the winding condition of the magnetic tape 6 can be seen through the transparent window plate 14.

As seen in Figure 2, the tape reels 4 and 5 each have an upper flange 17 and a lower flange 18. A reel hub edge 20 which is the bottom end portion of a reel hub 19 is rotatably fitted in a reel positioning hole 21 formed in the bottom wall 3a of the lower half 3.

Within the cassette housing 1, a leaf spring 22 is held in a space which is formed between the upper wall 2a of the upper half 2 and the upper flanges 17 of the tape reels 4 and 5. The leaf spring 22 is a V-shaped plate and is fixed to the upper half 2 at its apex portion, that is, the central portion 22a of the leaf spring 22. A small bore 23 is provided at the central portion 22a of the leaf spring 22 and a pin 24 formed integrally with the upper half 2 at the inside of its upper wall 2a is fitted into the small bore 23. Then, the tip of the pin 24 is spread by melting so as to fix the leaf spring 22 to the upper half 2. The end portions 22b and 22c of the leaf spring 22 push down respective projections 25 formed integrally with the reel hubs 19 at their upper central portions so as to press the tape reels 4 and 5 against the bottom wall 3a of the lower half 3. Thus, the tape reels 4 and 5 have their reel hub edges 20 fitted in the positioning holes 21 and their lower flanges 18 closely in contact with the inside of the bottom wall 3a of the lower half 3.

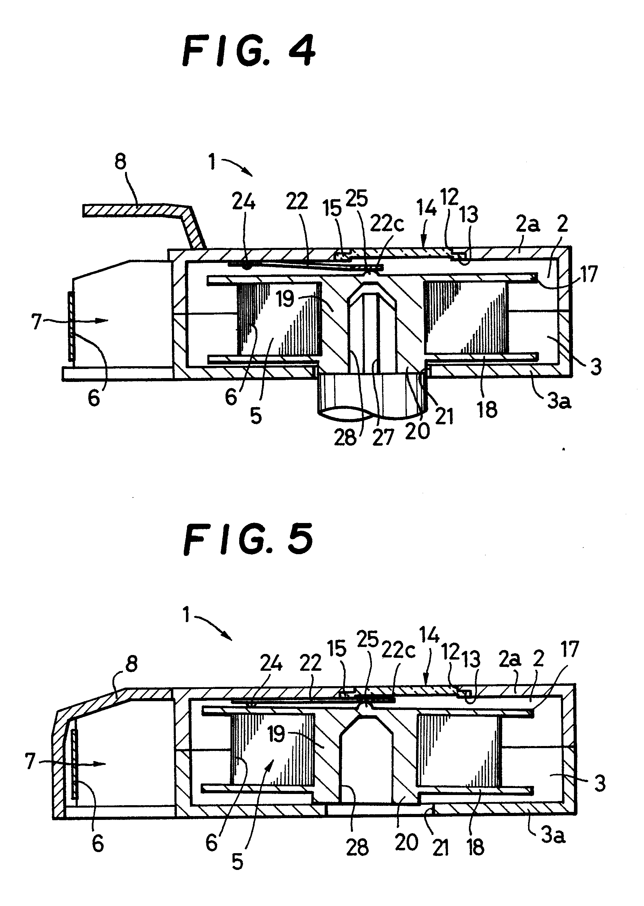

When this tape cassette is mounted in a video tape recorder (not illustrated), the front lid 8 is opened as shown in Figure 4 and respective reel drive shafts 27 arranged in the video tape recorder are inserted into apertures 28 of the reel hubs 19. Then, the tape reels 4 and 5 are lifted by the reel drive shaft 27 against the action of the leaf spring 22, so that the lower flanges 18 are clear of the bottom wall 3a of the lower half 3, so as to make them rotatable.

However, this tape cassette has the following defects.

When the tape cassette is handled, the ends of the reel hubs 19 may be pushed with the fingers, so that the tape reels 4 and 5 are pushed upward against the spring force of the leaf spring 22. Thus a reel hub edge 20 of a reel hub 19 may come out of its reel positioning hole 21, as illustrated in Figure 5. Then, the reel hub edge 20 of the reel hub 19 mounts the bottom wall 3a of the lower half 3 where it is held by the strong force of the leaf spring 22. Therefore, if the tape cassette is mounted in a video tape recorder in this state, the reel drive shaft 27 cannot be inserted into the aperture 28 of the reel hub 19, and the tape reel 4 or 5 is not rotatable and is also apt to be damaged.

According to the present invention there is provided a tape cassette comprising:

a cassette housing comprising an upper half and a lower half;

a pair of holes provided at the bottom wall of said lower half for exposing hubs of said tape reels; and

a window provided at the top wall of said upper half;

characterised by:

a rib formed on the lower periphery of said window for preventing undesirable excess movement of said tape reels towards said upper half.

Accordingly, an embodiment of tape cassette according to the present invention may have a rib formed on the lower periphery of a window which is provided in the upper wall of an upper half which forms part of a cassette housing of the tape cassette. Thereby, a pair of tape reels held in the cassette housing can be restricted in the amount of their upward movements. Due to this restriction, the end portion of the hubs of the pair of tape reels can be prevented from coming out of the reel positioning holes provided in a lower half of the cassette housing. Hence, the end portion of the hub of the tape reel is always kept fitting in the reel positioning hole, so that the pair of tape reels can be kept in the correct positions.

The rib may be formed on the lower periphery of a window and be so arranged as to enclose at least the centre of each of the pair of tape reels. Thereby, the amounts of upward movements of the pair of tape reels are always restricted, even when the pair of tape reels are pushed upward by an inclined force.

The invention will now be described by way of example with reference to the accompanying drawings, throughout which like parts are referred to by like references, and in which:

Figure 1 is a plan view of a previously proposed tape cassette for a video tape recorder;

Figure 2 is a sectional view taken along the line II-II in Figure 1;

Figures 3A and 3B are enlarged sectional views of an upper, a lower and a slide mould core for moulding an upper half of a cassette housing of Figure 1;

Figure 4 is a sectional view similar to Figure 2 of the tape cassette in use;

Figure 5 is a sectional view similar to Figure 2 of the tape cassette showing a reel lifted up;

Figures 6A and 6B are enlarged sectional views of an upper, a lower and a slide mould core for moulding an upper half of a cassette housing of a first embodiment of tape cassette according to this invention;

Figure 7 is an enlarged sectional view of part of the first embodiment;

Figure 8 is an enlarged sectional view similar to Figure 7 of part of the first embodiment for explaining the action when a reel is lifted;

Figures 9A and 9B are enlarged sectional views of parts of lower and slide mould cores for a modification of the first embodiment; and

Figure 10 is an enlarged sectional view of parts of the lower and slide mould cores for the modification.

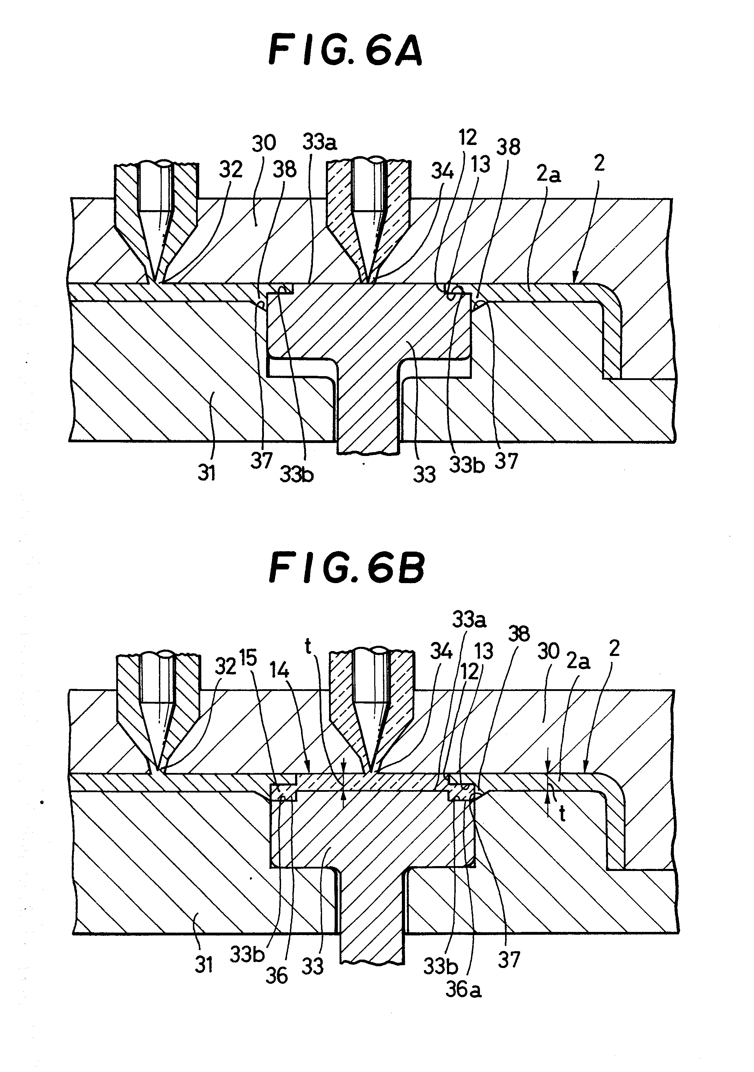

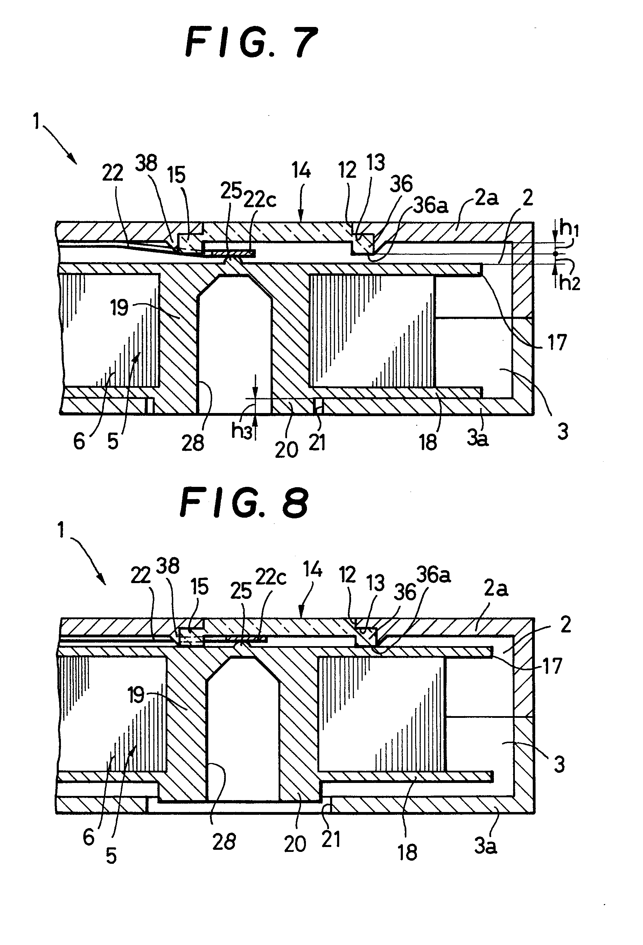

A feature of the first embodiment to be described is a rib 36 shown in Figure 7, which is formed on the lower periphery of a flange 15 of a transparent window plate 14 at the time when the transparent window plate 14 is moulded, the rib 36 protruding downward from the inside of an upper wall 2a of an upper half 2. The transparent window plate 14 is formed integrally with the upper half 2 in an upper mould core 30, a lower mould core 31 and a slide mould core 33, which has a step 33b on the periphery of its top 33a, by injection moulding from synthetic resin as in the case of the tape cassette described above. As illustrated in Figure 6A, a taper portion 37 is provided on the upper corner of the lower mould core 31 facing the slide mould core 33. Thereby, a line portion 38 of an almost triangular section is formed integrally with the upper half 2 on the inside of its upper wall 2a.

As illustrated in Figure 6B, the slide mould core 33 is thereafter moved down by a distance almost equal to the thickness $t$ of the upper wall 2a of the upper half 2 within the lower mould core 31, so that the rib 36 is formed on the lower periphery of the flange 15 of the transparent window plate 14 due to the step 33b of the slide mould core 33 at the time when the transparent window plate 14 is formed in the window space 12 integrally with the upper half 2, and the outer periphery of the rib 36 is connected with the line portion 38 of the upper half 2.

As mentioned above, the transparent window plate 14 with the rib 36 is formed integrally with the upper half 2, and the upper half 2 so formed is used as a part of the tape cassette as shown in Figure 7, when the tape cassette is assembled. The projection h1 of the rib 36 of the transparent window plate 14 is selected such that the distance h2 from the lower end 36a of the rib 36 to the upper flange 17 of the tape reels 4 and 5 is smaller than height $h_3$ of the reel hub edge 20 of the reel hub 19, and the portions of the rib 36 which would intersect with the leaf spring 22 are omitted. Thus the amount the tape reels 4 and 5 can lift is limited by the rib 36.

That is, as illustrated in Figure 8, when the lower end of the reel hub 19 of the tape reels 4 or 5 is pushed and lifted up, the upper flange 17 of the tape reel 4 or 5 abuts against the lower end 36a of the rib 36. Thereby, the tape reel 4 or 5 is restricted in its upward movement, and the reel hub edge 20 of the reel hub 19 is kept fitted in the reel positioning hole 21, because the distance $h_2$ of the possible upward movement is smaller than the height $h_3$ of the reel hub edge 20 of the reel hub 19. Therefore, the reel hub edge 20 does not come out of the reel positioning hole 21 and also is prevented from mounting on the inside of the bottom wall 3a of the lower half 3, so that the tape reels 4 and 5 can always be maintained in the correct position within the cassette housing 1.

In addition, the rib 36 formed integrally with the transparent window plate 14 not only reinforces the transparent window plate 14 but also improves the rigidity of the upper half 2, so that the upper half 2 is prevented from warping.

Moreover, the joint strength of the transparent window plate 14 to the upper half 2 is improved, because the outer periphery of the rib 36 is also joined to the line portion 38 of the upper half 2, so that a joint area between the transparent window plate 14 and the upper half 2 in the thickness direction of the upper half 2 is increased. Further, due to the taper portion 37 of the lower mould core 31, by which the line portion 38 is formed, the slide mould core 33 can be removed smoothly downward, and abrasion between the slide mould core 33 and lower mould core 31 is reduced, so that the lives of the slide mould core 33 and lower mould core 31 are prolonged. In addition, the taper portion 37 of the lower mould core 31 prevents the upper half 2 from sticking to the lower mould core 31 and improves the separation of the upper half 2 from the lower mould core 31.

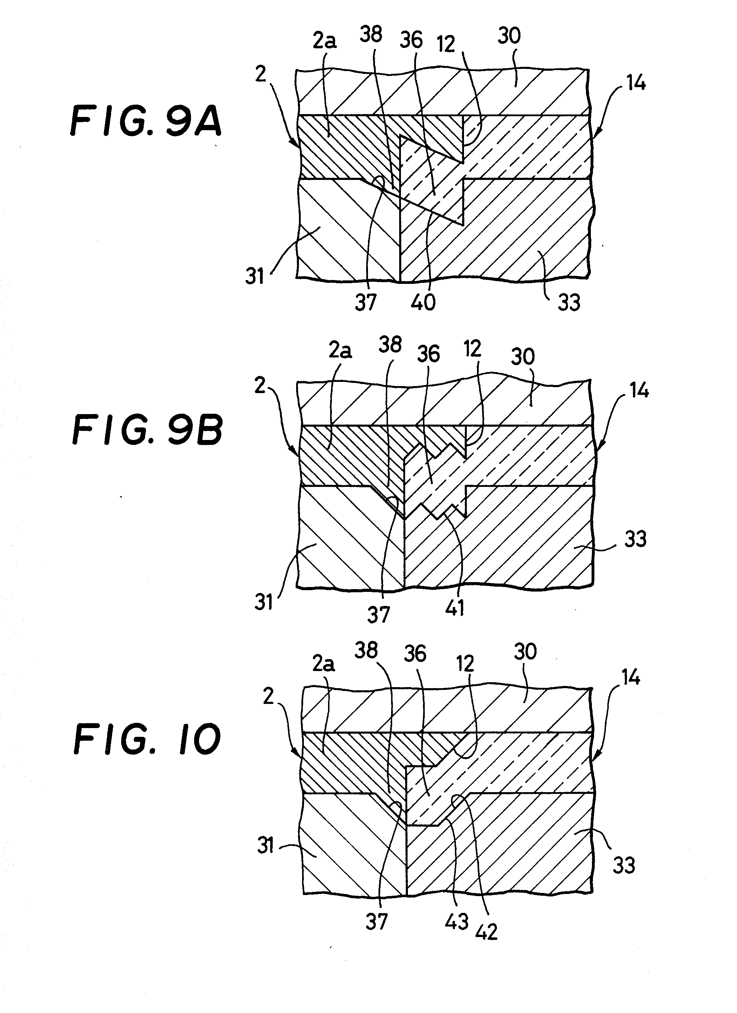

The shape of the rib 36 formed integrally with the transparent window plate 14 is not limited to that shown in the above embodiment, and various modifications may be made. For example, two modified shapes of the rib 36 are shown in Figures 9A and 9B. Figure 9A shows an inclined face 40, and Figure 9B shows a serrated face, and if the shape of the rib 36 is modified as mentioned above, the joint area between the transparent window plate 14 and upper half 2 in the thickness direction of the upper half 2 increases further and the joint strength is improved.

A modified embodiment is shown in Figure 10. In this case, a tapered rib 43 is obtained owing to a taper portion 42 provided on the top of the slide mould core 33. Thus, the upper half 2, with which the transparent window plate 14 is formed integrally, can easily be separated from the lower mould core 31 and slide mould core 33. That is, the rib 36 is adjacent to the interface where the window plate 14 is joined to the upper wall 2a of the upper half 2, and protrudes downward from the inside of the upper wall 2a of the upper half 2. When setting the resin shrinks and is apt to adhere to the slide mould core 33, so that is may be difficult to separate the rib 36 from the slide mould core 33. However, in the case of this modified embodiment, adhesion to the slide mould core 33 is avoided, due to the tapered rib 43.

The invention can be applied to tape cassettes not only for video tape recorders, but also for recording and/or reproducing apparatuses of other types, and for other information processing apparatuses.

## CLAIMS

1.    A tape cassette comprising:
a cassette housing (1) comprising an upper half (2) and a lower half (3);
a pair of holes (21) provided at the bottom wall (3a) of said lower half (3) for exposing hubs (19) of said tape reels (4,5); and
a window (14) provided at the top wall (2a) of said upper half (2);
characterised by:
a rib (36) formed on the lower periphery of said window (14) for preventing undesirable excess movement of said tape reels (4,5) towards said upper half (2).

2.    A tape cassette according to claim 1 wherein said rib (36) is arranged on the outer periphery of an area which includes at least each centre of said pair of reels (4,5).

3.    A tape cassette according to claim 2 wherein said rib (36) protrudes in the direction of said lower half (3) from the inside of said upper half (2).

4.    A tape cassette according to claim 3 wherein said rib (36) is moulded at the same time that said window (14) is moulded.

5.    A tape cassette according to claim 4 wherein said window (14) with said rib (36) is moulded of transparent resin at a time when said upper half (2) is moulded out of opaque resin.

6.    A tape cassette according to claim 5 wherein said upper half (2) and said window (14) with said rib (36) are joined together through an interface between opaque resin and transparent resin which is large compared with the thicknesses of said upper half (2) and said window (14).

7.    A tape cassette according to claim 4 wherein said upper half (2) and said window (14) with said rib (36) are formed by the use of a slidable mould core (33) having a step portion on the periphery of its top surface.

# FIG. 1

# FIG. 2

# FIG. 3A

# FIG. 3B

# FIG. 4

# FIG. 5

0152693

# FIG. 6A

# FIG. 6B

# FIG. 7

# FIG. 8

0152693

FIG. 9A

FIG. 9B

FIG. 10

## DOCUMENTS CONSIDERED TO BE RELEVANT

EP 84308658.8

| Category | Citation of document with indication, where appropriate, of relevant passages | Relevant to claim | CLASSIFICATION OF THE APPLICATION (Int. Cl.4) |
|---|---|---|---|
| | | | G 11 B 23/04 |
| Y | DE - A - 2 404 967 (SONY) <br> * Fig. 2; page 5, line 6 - page 6, line 23 * | 1-3 | |
| Y | DE - A1 - 2 909 503 (START) <br> * Fig. 1; claim 1-3 * | 1-3 | |
| A | DE - A1 - 2 735 992 (START) <br> * Fig. 1,2; claim 1-4 * | 1-3 | |
| A | DE - A1 - 2 909 502 (START) <br> * Fig. 1,2 * | 1-3 | |
| A | DE - A1 - 3 010 405 (TDK) <br> * Fig. 5 * | 1-3 | TECHNICAL FIELDS SEARCHED (Int. Cl.4) <br><br> G 11 B 23/00 <br> G 11 B 25/00 <br> G 11 B 15/00 |

The present search report has been drawn up for all claims

| Place of search | Date of completion of the search | Examiner |
|---|---|---|
| VIENNA | 26-03-1985 | BERGER |